# EUROPEAN PATENT APPLICATION

(11) **EP 2 256 455 A1**
(43) Date of publication of application: **01.12.2010**
(21) Application number: 09722625.2
(22) Date of filing: 10.03.2009
(51) Int. Cl.: G01B 11/08, D01H 13/32, D04B 35/00

(54) **DEVICE, PROGRAM AND METHOD FOR MEASURING YARN**

(30) Priority: 18.03.2008 JP 2008068841
(71) Applicant: Shima Seiki Manufacturing., Ltd., Wakayama-shi Wakayama 641-0003 (JP)
(72) Inventor: FUJISAKI, Hirotaka, Wakayama-shi Wakayama 641-0003 (JP)
(74) Representative: Tomlinson, Kerry John
(86) International application number: PCT/JP2009/054497
(87) International publication number: WO 2009/116420

(57) **Abstract**

A digital image of a yarn (90) is photographed and transformed into a two-dimensional Fourier transform image along a lateral direction and a longitudinal direction of the yarn (90). Low frequency components of the two-dimensional Fourier transform image corresponding to a yarn main body are cut out by a filter (59, 60), a two-dimensional inverse Fourier transformation is performed thereon, to output an image of the yarn main body, and a diameter of the yarn (90) is calculated from the image of the yarn main body. The diameter of the yarn (90) can be calculated easily and accurately by means of a digital camera or scanner.

## Description

The present invention relates to a measurement of a yarn, and particularly to a measurement of the thickness of a yarn or the amount of fluff of the yarn.

The applicant has proposed a device for measuring a yarn diameter (Patent Literature 1: JP2005-15958A). In this device, an image of a yarn is captured using a scanner or the like and a boundary is set between a yarn main body and fluff, to measure the thickness of the yarn main body. The problem here is that the method for drawing the boundary is underspecified.

Aside from this fact, (Patent Literature 2: JP3611140B) discloses a device for measuring a yarn diameter or the amount of fluff by means of an optical Fourier transformation. In Patent Literature 2, a yarn is irradiated with a laser beam and the diffracted light of the laser beam is converged using a lens to create a spectral plane on a focal point surface. A Fourier transform image of the diffracted light is generated on the spectral plane, which is provided with a slit for allowing a low-frequency image of a yarn main body to pass therethrough and a slit for allowing a high-frequency image of fluff to pass therethrough and provided to the Fourier transform image. Then, the image of the yarn main body and the image of the fluff are obtained by performing an inverse Fourier transformation on the spectral plane by means of the lens. Patent Literature 2, however, requires hardware such as a laser light source, the lens and the slits, and the measurement cannot be performed if the positions of these hardware are not aligned with the yarn accurately. Because the fluff and the yarn main body are separated by the slits, a plurality of slits need to be prepared according to the yarn diameter. Moreover, the measurement becomes complicated with a semi-transparent yarn because a weak diffracted image is obtained therefrom.
Patent Literature 1: JP2005-15958A
Patent Literature 2: JP3611140B

An object of the present invention is to be able to accurately calculate a yarn diameter by using a normal photographing device, such as a digital camera or a scanner.
Another object of the present invention is to be able to accurately calculate the amount of fluff.
Yet another object of the present invention is to create a simulation yarn model.

A device for measuring a yarn according to the present invention has: a photographing device for photographing a digital image of a yarn; transformation means for obtaining Fourier transform data or autocorrelation function data of the digital image by means of digital signal processing; and yarn property calculation means for calculating a yarn diameter of the yarn or an amount of fluff of the yarn from the data obtained by the transformation means.

It is preferred that the transformation means be two-dimensional Fourier transformation means for transforming the digital image to a two-dimensional Fourier transform image along a lateral direction and longitudinal direction of the yarn, and that the yarn property calculation means have: a filter for cutting out low frequency components of the two-dimensional Fourier transform image corresponding to a yarn main body; inverse Fourier transformation means for performing a two-dimensional inverse Fourier transformation on the low frequency components cut out by the filter, to output an image of the yarn main body; and yarn diameter calculation means for calculating the yarn diameter from the output image of the yarn main body.

It is preferred that the transformation means be two-dimensional Fourier transformation means for transforming the digital image to a two-dimensional Fourier transform image along a lateral direction and longitudinal direction of the yarn, and that the yarn property calculation means have: a filter for cutting out high frequency components of the two-dimensional Fourier transform image corresponding to the fluff; inverse Fourier transformation means for performing a two-dimensional inverse Fourier transformation on the high frequency components cut out by the filter, to output an image of the fluff; and fluff amount measuring means for measuring the amount of fluff from the output image of the fluff.
It is also preferred that the device for measuring a yarn be further provided with means for creating a three-dimensional model of the yarn by means of the calculated yarn diameter and a texture of the yarn, and simulation means for simulating a knitted product using the yarn by using the three-dimensional model of the yarn.
Preferably, the device for measuring a yarn is further provided with filter generation means for generating the filter from a waveform of a peak of the low frequency components of the two-dimensional Fourier transform image corresponding to the yarn main body.
Preferably, the yarn property calculation means calculates the yarn diameter from a width of a low-frequency side peak of the Fourier transform data.

A program for measuring a yarn according to the present invention which causes a computer to execute: a transformation step of obtaining Fourier transform data or autocorrelation function data of a photographed digital image of a yarn by means of digital signal processing; and a yarn property calculation step of calculating a yarn diameter of the yarn or an amount of fluff of the yarn from the data obtained in the transformation step.

It is preferred that in the transformation step, the digital image is transformed to a two-dimensional Fourier transform image along a lateral direction and a longitudinal direction of the yarn, and that in the yarn property calculation step, low frequency components of the two-dimensional Fourier transform image corresponding to a yarn main body are cut out using a filter, a two-dimensional inverse Fourier transformation is performed on the cut out low frequency components, to output an image of the yarn main body, and the yarn diameter is calculated from the output image of the yarn main body.
Preferably, in the yarn property calculation step, the yarn diameter is calculated from a width of a low-frequency side peak of the Fourier transform data.

The present invention is also a method for measuring a yarn, having: a step of photographing a digital image of a yarn using a photographing device; a transformation step of obtaining Fourier transform data or autocorrelation function data of the photographed digital image of the yarn by means of digital signal processing; and a yarn property calculation step of calculating a yarn diameter of the yarn or an amount of fluff of the yarn from the data obtained in the transformation step.

It is preferred that in the transformation step, the digital image is transformed to a two-dimensional Fourier transform image along a lateral direction and a longitudinal direction of the yarn, and that in the yarn property calculation step, low frequency components of the two-dimensional Fourier transform image corresponding to a yarn main body are cut out using a low-pass filter, a two-dimensional inverse Fourier transformation is performed on the cut out low frequency components, to output an image of the yarn main body, and the yarn diameter is calculated from the output image of the yarn main body.
It is also preferred that in the yarn property calculation step, the yarn diameter is calculated from a width of a low-frequency side peak of the Fourier transform data.
In this specification, the descriptions of the device for measuring a yarn apply directly to the program and method for measuring a yarn, and the descriptions of the program for measuring a yarn apply directly to the device for measuring a yarn.

In the present invention the digital image of the yarn is transformed to the Fourier transform data or the autocorrelation function data. The Fourier transform data of the yarn includes data corresponding to the yarn diameter or the amount of fluff, and the yarn diameter is calculated from this data. The correlation width in the autocorrelation function data corresponds to the yarn diameter, and the strength of a signal with an extremely short correlation distance corresponds to the amount of fluff. Therefore, according to the present invention, the yarn diameter and the amount of fluff can be calculated only by the digital signal processing by acquiring the digital image of the yarn using a digital camera or the like, without requiring a special optical system. In addition, even with a semi-transparent yarn, the yarn diameter or amount of fluff of the semi-transparent yarn can be calculated by photographing a digital image thereof. Subtle data, such as a boundary between a yarn main body and fluff is not required.

Hence, the image of the yarn main body only is obtained by performing the two-dimensional Fourier transformation on the digital image of the yarn, cutting out the low frequency components by using the filter, and performing the inverse Fourier transformation. Then, the yarn diameter is calculated accurately by calculating the width of the image of the yarn main body.
The image of the fluff only is obtained by using the filter to cut out the high frequency components from the two-dimensional Fourier transform data and then performing the inverse Fourier transformation on the high frequency components. The amount of fluff can be calculated from the image of the fluff.
Furthermore, the three-dimensional model of the yarn is created by means of the calculated yarn diameter and the texture of the yarn. A knitted product can be simulated accurately by using the three-dimensional model to simulate the knitted product.
In the two-dimensional Fourier transform data of the yarn, a peak corresponding to the yarn main body appears on the low-frequency side. A filter for separating the yarn main body and the fluff can be created automatically from this peak waveform.

Fig. 1 is a block diagram of a device for measuring a yarn according to an embodiment;
Fig. 2 is a diagram showing two-dimensional Fourier transformation processing performed on a yarn image according to the embodiment;
Fig. 3 is a diagram showing one-dimensional Fourier transformation processing performed on the yarn image according to the embodiment;
Fig. 4 is a diagram showing how filters are generated in the embodiment;
Fig. 5 is a diagram showing a yarn image used in a test example;
Fig. 6 is a diagram showing two-dimensional Fourier transform data obtained in Fig. 5;
Fig. 7 is a diagram showing a yarn main body image obtained by performing a two-dimensional inverse Fourier transformation on the data shown in Fig. 5;
Fig. 8 is a diagram showing a fluff image obtained by performing the two-dimensional inverse Fourier transformation and binarization on the data shown in Fig. 5;
Fig. 9 is a block diagram of a program for measuring a yarn according to the embodiment; and
Fig. 10 is a block diagram showing an example in which the embodiment is applied to management of yarn diameter.

- 2: Measuring device
- 4: Bus
- 6: Digital camera
- 8: Color monitor
- 10: Keyboard
- 12: Color printer
- 14: Mouse
- 16: Network interface
- 18 to 22: Image memory
- 24: Fourier transforming unit
- 25: Fourier transform image storage unit
- 26: Filter generation unit
- 27: Binarizing unit
- 28: Counter
- 30: Program memory
- 32: Yarn model creation unit
- 34: Simulation unit
- 36: Knitting data storage unit
- 40, 41: Yarn main body image
- 42, 43: Fluff image
- 44: Yarn main body area
- 46: Fluff area
- 48: Middle area
- 50, 51: Filter
- 52, 53: Yarn main body image
- 54,55: Fluff image
- 56: Yarn main body area
- 58: Fluff area
- 59, 60: Filter
- 80: Yarn measuring program
- 81: Two-dimensional Fourier transformation instruction
- 82: Filtering instruction
- 83: Two-dimensional inverse Fourier transformation instruction
- 84: Binarization instruction
- 85: Count instruction
- 90: Yarn
- 91, 92: Roller
- 94: Storage device

The best mode for carrying out the present invention is described hereinafter.

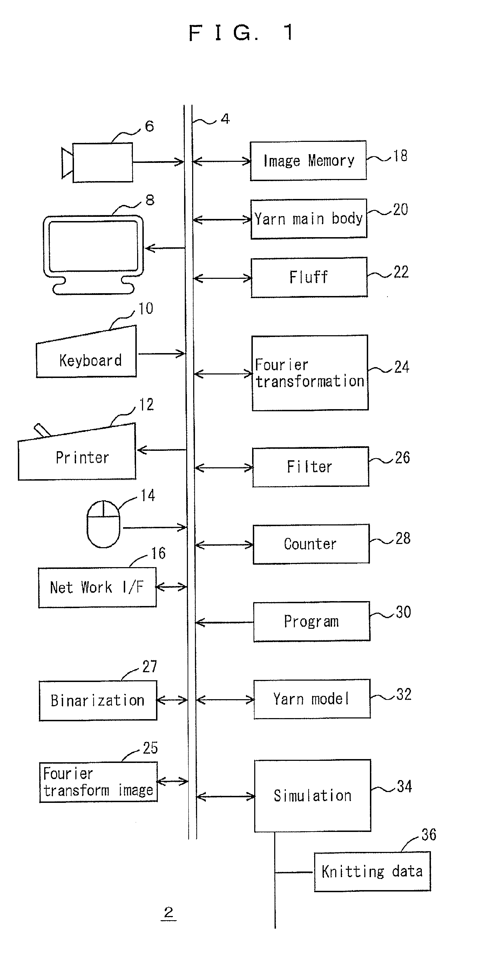

Figs. 1 to 10 each show a yarn measuring device 2 and yarn measuring program 80 according to an embodiment. In Fig. 1, reference numeral 4 represents a bus, 6 a color digital camera or a color scanner, 8 a color monitor, 10 a keyboard, 12 a color printer, and 14 a mouse. In place of the mouse 14, a trackball, a joystick, a stylus or the like may be used. Reference numeral 16 represents a network interface for inputting/outputting various programs and data, and reference numerals 18 to 22 represent image memories. Of these image memories, the image memory 18 stores a color image of a yarn that is photographed by the digital camera 6. The image memory 20 stores an image of a yarn main body that is separated from the image of the yarn by means of a Fourier transformation. The image memory 22 stores an image of fluff that is separated from the image of the yarn by means of the Fourier transformation.

A Fourier transformation unit 24 transforms the color image of the yarn to a two-dimensional Fourier transform image. As preprocessing that is performed before the transformation, the Fourier transformation unit 24 transforms the color image to, for example, a luminous image. Instead of performing the two-dimensional Fourier transformation, one-dimensional Fourier transformation may be performed. When the color is considered particularly important in a yarn such as a mélange yarn, for example, the two-dimensional Fourier transformation may be carried out for each of RGB components thereof. A Fourier transform image of the yarn is stored in a Fourier transform image storage unit 25. The Fourier transformation unit 24 also performs a two-dimensional inverse Fourier transformation on an image processed by a filter, to create an image of the yarn main body and an image of the fluff. A filter generation unit 26 generates a filter for separating the yarn main body and the fluff from the Fourier transform image. A binarizing unit 27 binarizes the image subjected to the inverse Fourier transformation, and particularly binarizes the fluff image. A counter 28 counts the number of pixels of the image of the fluff and of the image of the yarn main body, and calculates a yarn diameter of the yarn main body, a distribution or fluctuation pattern of the yarn diameter, the amount of fluff, and the like.

A program memory 30 stores a yarn measuring program 80 and the like. A yarn model creation unit 32 generates a three-dimensional model of the yarn by using the yarn diameter calculated by the counter 28 and a texture of the yarn that is stored in the image memory 18. A simulation unit 34 uses the generated yarn model to perform a simulation on knitting data stored in a knitting data storage unit 36, so as to express individual loops of a knit garment.

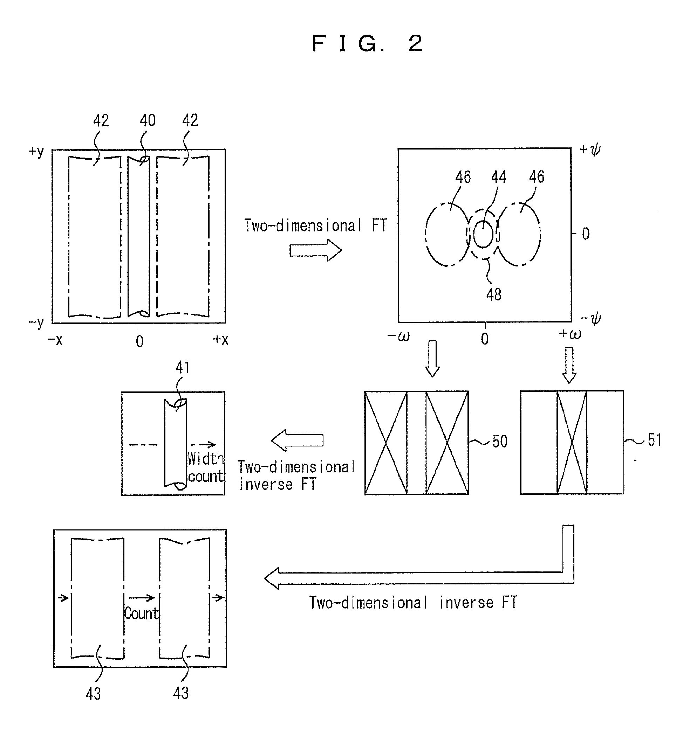

Fig. 2 shows an outline of processes performed in the embodiment. A short side direction of the yarn is taken as an x-direction and a longitudinal direction as a y-direction. The image obtained by the digital camera 6 includes a yarn main body image 40 and a fluff image 42, wherein an image with a mixture of the yarn main body and the fluff is present between the images 40, 42. In the two-dimensional Fourier transform image obtained by performing the two-dimensional Fourier transformation on this image, a low frequency region includes a yarn main body area 44, a high frequency region includes a fluff area 46, and the middle therebetween includes a middle area 48. Hereinafter, ω represents a frequency along the x-direction, and φ represents a frequency along the y-direction. The range of frequencies for Fourier transformation is defined according to a high-frequency side end of the fluff area 46. The Fourier transform data have both a real number component and imaginary component, but may also include a power spectrum in place of the real number component and the imaginary component. For example, when the real number component is Re(ω) and the imaginary component I(ω), the power spectrum P(ω) is obtained by (Re²(ω) + I²(ω))^{1/2}.

In the two-dimensional Fourier transform image, the frequency components corresponding to the yarn main body are extracted using a filter 50 that allows only the yarn main body area 44 to pass therethrough, and the two-dimensional inverse Fourier transformation is performed on the frequency components, whereby a yarn main body image 41 is obtained. Similarly, a filter 51 that allows only the fluff area 46 to pass therethrough is adopted to perform the two-dimensional inverse Fourier transformation, whereby fluff images 43, 43 are obtained. The filter 50 allows, for example, only the low frequency components that follow the ω direction to pass therethrough, while the filter 51 allows only the high frequency components that follow along the ω direction to pass therethrough. The narrower the width of each frequency passing through the filter 50, the smoother the obtained yarn main body image 41 becomes. On the other hand, by increasing the width of each component passing through the filter 50, subtle irregularities and twists of the yarn main body can be reflected on the yarn main body image 41. In the embodiment, a gap is provided between both ends of the frequencies passing through the filter 50 and between both ends of the frequencies cut by the filter 51, to remove the frequency components of the middle area 48. However, all of the frequencies outside the frequencies cut by the filter 50 may be allowed to pass through the filter 51, without removing the middle area 48.

The yarn diameter can be calculated by counting the number of widths along the x-direction in the yarn main body 41. Alternatively, the yarn diameter can be calculated by counting the total number of pixels corresponding to the yarn main body and dividing the total number by the number of pixels in a length direction of the yarn main body. The degree of the fluctuation of the yarn diameter that is caused by the twists and knots can be calculated by calculating the yarn diameters of various positions and then calculating the average value thereof, as well as variance values and abnormal values. Because the fluff image 43 is generally a weak image, the amount of fluff can be calculated by separating the fluff and the background from each other by means of binarization and counting the number of pixels corresponding to the fluff. In order to calculate the amount of fluff, the total number of pixels corresponding to the fluff may be counted, or the number of pixels corresponding to the fluff on a plurality of lines along the x-direction may be counted. In addition, the amount of fluff can be calculated even by transforming the high-frequency side Fourier transform components corresponding to the fluff, to the amount of fluff for each frequency by means of a reference table, which is not shown, and then adding the calculated amount of fluff to the frequencies.

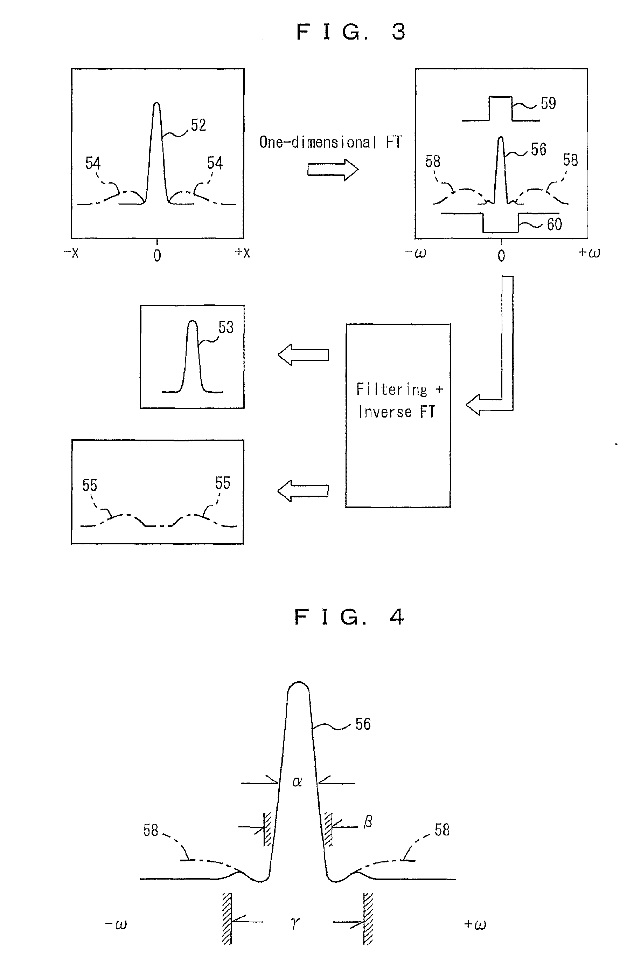

Although the two-dimensional Fourier transformation is used in the embodiment, the one-dimensional Fourier transformation may be used. When performing the one-dimensional Fourier transformation, the processing is easy to understand because the processing in the y-direction shown in Fig. 2 is not required. Reference numeral 52 shown in Fig. 3 represents a yarn main body image, and fluff images 54 are present around the yarn main body image 52. By performing the one-dimensional Fourier transformation on these images along the width direction of the yarn, a yarn main body area 56 and fluff area 58 are obtained. Next, the frequency components corresponding to the yarn main body are cut out using a filter 59, and the high frequency components corresponding to the fluff are cut out using a filter 60. Then, the inverse Fourier transformation is performed to obtain a yarn main body image 53 and fluff image 55. Note that although Fig. 3 shows the filters in the shape of rectangles, filters that smoothly change the permeabilities thereof may be used.

Fig. 4 shows how the filters are generated. The image of the yarn main body has a peak in the vicinity of 0 frequency, and the width of the peak corresponds to the yarn diameter. Bands of the filters 59, 60 are determined from the shape of the peak of the yarn main body area 56 obtained from the Fourier transformation. For example, a half bandwidth α of the peak of the yarn main body 56 is calculated, and thus calculated value is multiplied by a first coefficient to calculate a bandwidth β for cutting out the yarn main body area 56. Similarly, the calculated value is multiplied by a second coefficient to calculate a second bandwidth γ for cutting out the fluff area 58. The bandwidth β is used as a low-pass filter, and the bandwidth γ is used as a high-pass filter. In addition, a value alternative to the half bandwidth α can be calculated by using a 0 crossing point between the yarn main body area 56 and the fluff area 58 or by extrapolating a line of the peak of the yarn main body 56 to use a point crossing with 0. Note that when the digital image of the yarn main body is expressed by a rectangle having a width D, the Fourier transform image thereof is approximately sinc(f·D), and sinc(x) is calculated from sin(x)/x. When the width of the peak of the yarn main body is calculated in Fig. 4, D, which is the yarn diameter, can be calculated, and the yarn diameter can be calculated without performing the inverse Fourier transformation. The data shown in Fig. 4 is one-dimensional Fourier transform data, but the yarn diameter may be calculated from the peak width in the ω direction of the low-frequency side peak where the ω is approximately 0 in the two-dimensional Fourier transform data. Also, the two-dimensional Fourier transform data may be smoothened or added up along the φ direction to obtain the one-dimensional Fourier transform data shown in Fig. 4.

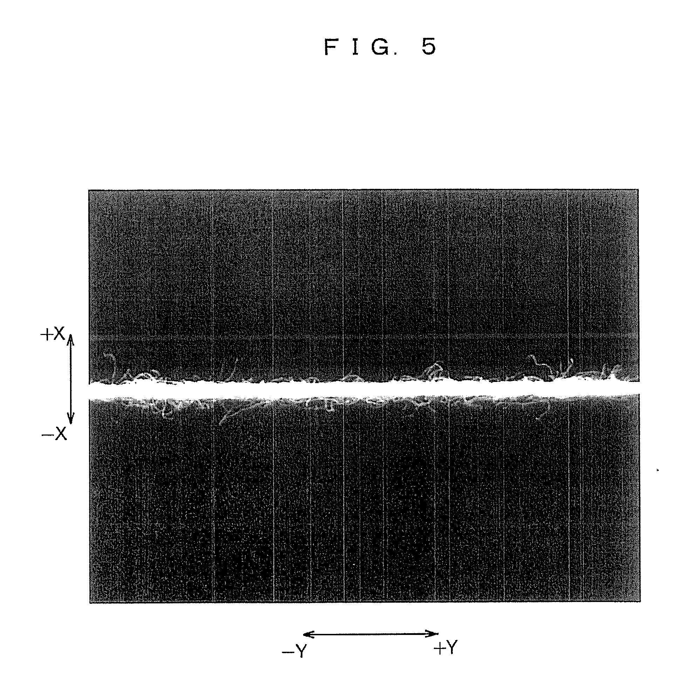

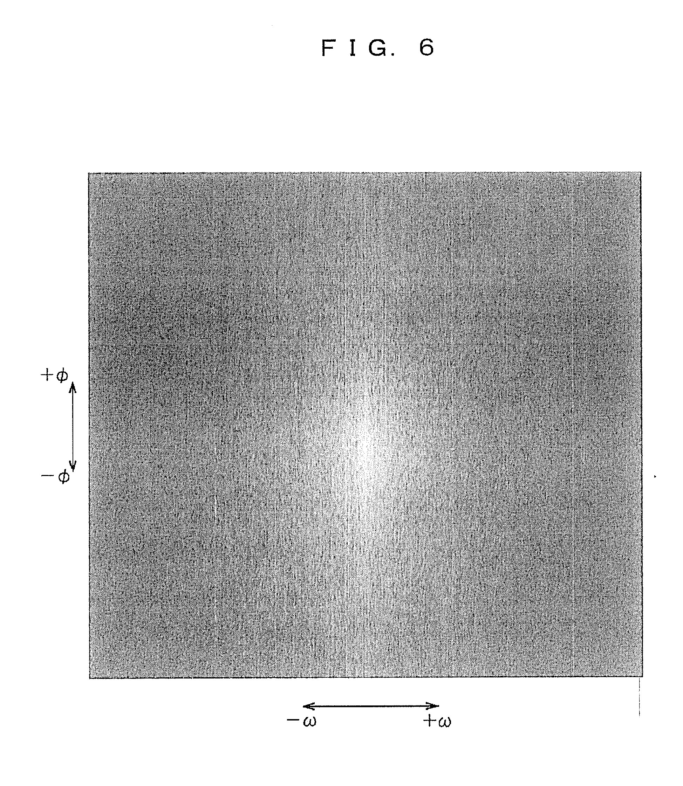

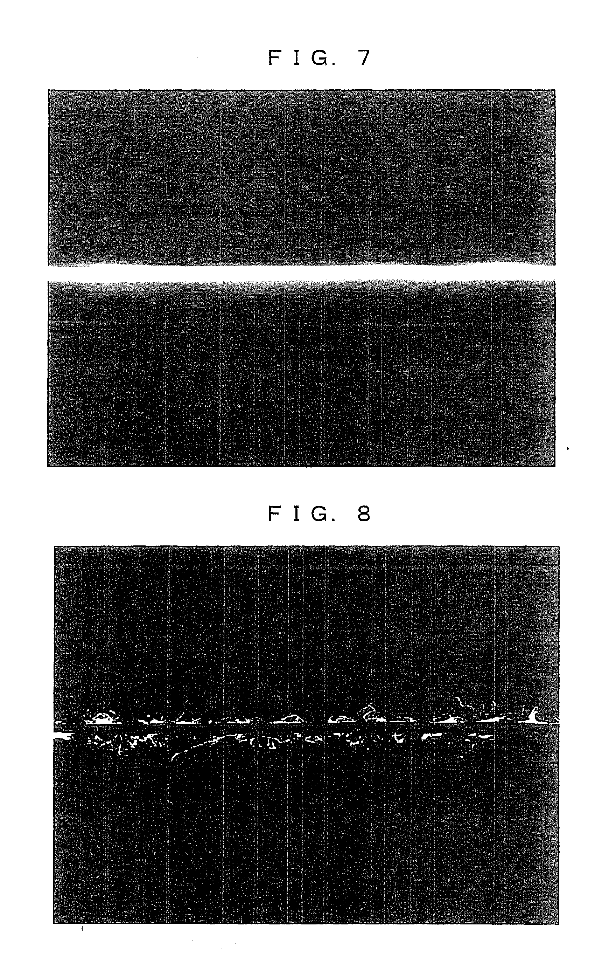

Figs. 5 to 8 shows the results of processing a yarn image. Fig. 5 shows a yarn image photographed by the digital camera, and Fig. 6 shows an image subjected to the two-dimensional Fourier transformation. Note in Fig. 6 that the directions of axes are represented by ω and φ. The image shown in Fig. 6 is processed using a filter to cut out only a yarn main body area on the low-frequency side. An image obtained by subjecting thus obtained result to the two-dimensional inverse Fourier transformation is shown in Fig. 7. This is an image in which the surface of the yarn main body is smoothened. This image is clear enough to calculate the yarn diameter. Note that the yarn diameter may be calculated after binarizing the image shown in Fig. 7. An image shown in Fig. 8 is a fluff image that is obtained by applying the filter to the image shown in Fig. 6, to extract the frequency components of the fluff area, performing the two-dimensional inverse Fourier transformation on the frequency components and thereafter binarizing thus obtained result. Note that the fluff image is darker than the yarn main body image, and a binarized threshold of the fluff is made lower than that of the yarn main body. Then, the amount of fluff can be calculated by counting the number of white pixels shown in Fig. 8.

Once the diameter of the yarn main body is defined, a yarn model can be created. The yarn model can be expressed by a prism such as a quadratic prism or a hexagonal prism. Each of the surfaces of the yarn model is divided into polygons, and the yarn model is bent along the sides of the polygons, to form loops. Once the yarn diameter is defined, the diameter of the quadratic prism or hexagonal prism is defined, and consequently the polygons of the surfaces of the yarn are obtained. The texture of the yarn is subjected to texture mapping, as it is already photographed by the digital camera.

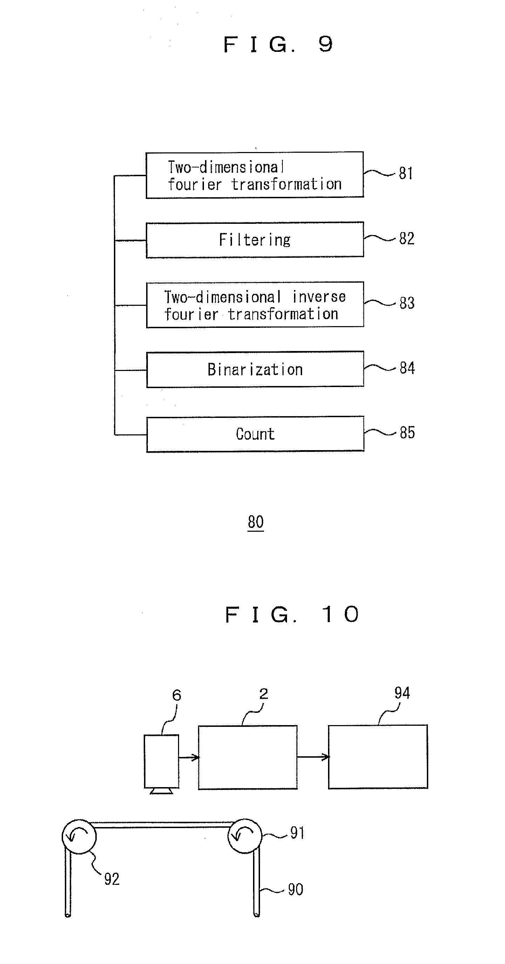

Fig. 9 shows a yarn measuring program 80. A two-dimensional Fourier transformation instruction 81 performs the two-dimensional Fourier transformation on the digital image of the yarn. A filtering instruction 82 generates a filter from the Fourier-transformed image to generate a filter for cutting out the yarn main body and a filter for cutting out the fluff. A two-dimensional inverse Fourier transformation instruction 83 performs the inverse Fourier transformation on the filtered Fourier transform data to separate thus obtained data into the yarn main body image and the fluff image. A binarization instruction 84 performs binarization on these images and may omit to perform the binarization on the yarn main body image as described above. A count instruction 85 counts the yarn diameter and the amount of fluff by counting the number of pixels corresponding to the yarn in the yarn main body image or the fluff image. Because the Fourier transformation and the inverse Fourier transformation have the same process details, most of these processes can be standardized.

Fig. 10 shows an application in yarn quality management. Reference numeral 90 represents a yarn, and reference numerals 91, 92 represent yarn feeding rollers. An image of the yarn is photographed using the digital camera 6. When photographing the image, it is preferred that the rollers 91, 92 be stopped to photograph a static image, so that an accurate image can be obtained. The measuring device 2 is used on the photographed image to measure, for example, the yarn diameter, and the yarn diameter is stored in a storage device 94. The quality of the yarn 90 is managed based on the presence/absence of a variance value or abnormal value of the measured yarn diameter. The amount of fluff is also measured by the measuring device 2, and the measured amount of fluff is stored in the storage device 94 and similarly subjected to quality management.

The following effects can be obtained according to the embodiment.
(1) Only the digital camera 6 is required as the hardware that is used before signal processing. No accurate adjustment is required because it is only necessary to photograph an image of the yarn using the digital camera 6.
(2) The filter for cutting out the yarn main body and the filter for cutting out the fluff can be generated automatically from the shape of the low-frequency side peak corresponding to the yarn main body. Therefore, a thin yarn or a thick yarn can be processed easily.
(3) Because diffracted light is not used, the yarn diameter and the amount of fluff of a semi-transparent yarn can be measured.

The embodiment has illustrated the Fourier transformation, and, as already known, the Fourier transformation and autocorrelation function have the similar characteristics. In other words, even when a correlation distance obtained from the autocorrelation function is used in place of the frequencies in the embodiment, exactly the same processes can be conducted. For example, the yarn diameter D is the correlation width obtained in the autocorrelation function, and, for example, the correlation peak value on the longer side in a one-dimensional autocorrelation function is the yarn diameter. In addition, 0 correlation distance in the autocorrelation function and the strength of an extremely short component represents the amount of fluff.

## Claims

1. A yarn measuring device (2), **characterized by** comprising:
a photographing device for photographing a digital image of a yarn (90);
transformation means for obtaining Fourier transform data or autocorrelation function data of the digital image by means of digital signal processing; and
yarn property calculation means for calculating a yarn diameter of the yarn (90) or an amount of fluff of the yarn (90) from the data obtained by the transformation means.

2. The yarn measuring device (2) according to claim 1, **characterized in that**
the transformation means is two-dimensional Fourier transformation means for transforming the digital image to a two-dimensional Fourier transform image along a lateral direction and a longitudinal direction of the yarn (90), and **characterized in that**
the yarn property calculation means has: a filter (59, 60) for cutting out low frequency components of the two-dimensional Fourier transform image corresponding to a yarn main body; inverse Fourier transformation means for performing a two-dimensional inverse Fourier transformation on the low frequency components cut out by the filter (59, 60), to output an image of the yarn main body; and yarn diameter calculation means for calculating the yarn diameter from the output image of the yarn main body.

3. The yarn measuring device (2) according to claim 1 or 2, **characterized in that**
the transformation means is two-dimensional Fourier transformation means for transforming the digital image to a two-dimensional Fourier transform image along a lateral direction and a longitudinal direction of the yarn (90), and **characterized in that**
the yarn property calculation means has: a filter (59, 60) for cutting out high frequency components of the two-dimensional Fourier transform image corresponding to the fluff; inverse Fourier transformation means for performing a two-dimensional inverse Fourier transformation on the high frequency components cut out by the filter (59, 60), to output an image of the fluff; and fluff amount measuring means for measuring the amount of fluff from the output image of the fluff.

4. The yarn measuring device (2) according to claim 2, **characterized by** further comprising:
means for creating a three-dimensional model of the yarn (90) by means of the calculated yarn diameter and a texture of the yarn (90); and
simulation means for simulating a knitted product using the yarn (90) by using the three-dimensional model of the yarn (90).

5. The yarn measuring device (2) according to claim 2, **characterized by** further comprising filter generation means for generating the filter (59, 60) from a waveform of a peak of the low frequency components of the two-dimensional Fourier transform image corresponding to the yarn main body.

6. The yarn measuring device (2) according to claim 1, **characterized in that**
the yarn property calculation means calculates the yarn diameter from a width of a low-frequency side peak of the Fourier transform data.

7. A yarn measuring program (80) which causes a computer to execute:
a transformation step of obtaining Fourier transform data or autocorrelation function data of a photographed digital image of a yarn (90) by means of digital signal processing; and
a yarn property calculation step of calculating a yarn diameter of the yarn (90) or an amount of fluff of the yarn (90) from the data obtained in the transformation step.

8. The yarn measuring program (80) according to claim 7, **characterized in that**
in the transformation step, the digital image is transformed to a two-dimensional Fourier transform image along a lateral direction and a longitudinal direction of the yarn (90), and **characterized in that**
in the yarn property calculation step, low frequency components of the two-dimensional Fourier transform image corresponding to a yarn main body are cut out using a filter (59, 60), a two-dimensional inverse Fourier transformation is performed on the cut out low frequency components, to output an image of the yarn main body, and the yarn diameter is calculated from the output image of the yarn main body.

9. The yarn measuring program (80) according to claim 7, **characterized in that**
in the yarn property calculation step, the yarn diameter is calculated from a width of a low-frequency side peak of the Fourier transform data.

10. A yarn measuring method, **characterized by** comprising:
a step of photographing a digital image of a yarn (90) using a photographing device;
a transformation step of obtaining Fourier transform data or autocorrelation function data of the photographed digital image of the yarn (90) by means of digital signal processing; and
a yarn property calculation step of calculating a yarn diameter of the yarn (90) or an amount of fluff of the yarn (90) from the data obtained in the transformation step.

11. The yarn measuring method according to claim 10, **characterized in that**
in the transformation step, the digital image is transformed to a two-dimensional Fourier transform image along a lateral direction and a longitudinal direction of the yarn (90), and **characterized in that**
in the yarn property calculation step, low frequency components of the two-dimensional Fourier transform image corresponding to a yarn main body are cut out using a low-pass filter, a two-dimensional inverse Fourier transformation is performed on the cut out low frequency components, to output an image of the yarn main body, and the yarn diameter is calculated from the output image of the yarn main body.

12. The yarn measuring method according to claim 10, **characterized in that** in the yarn property calculation step, the yarn diameter is calculated from a width of a low-frequency side peak of the Fourier transform data.
